# EUROPEAN PATENT APPLICATION

(11) **EP 4 819 217 A1**
(43) Date of publication of application: **07.10.2026**
(21) Application number: 26169574.6
(22) Date of filing: 31.03.2026
(51) Int. Cl.: H01M 4/13, H01M 4/131, H01M 4/134, H01M 4/36, H01M 4/38, H01M 4/505, H01M 4/525, H01M 10/0587, H01M 4/587, H01M 4/66, H01M 10/0525, H01M 10/0567

(54) **LITHIUM-ION SECONDARY BATTERY**

(30) Priority: 31.03.2025 CN 202510394765
(71) Applicant: Zhuhai CosMX Battery Co., Ltd., Zhuhai, Guangdong 519180 (CN)
(72) Inventor: CAI, Zelin, Zhuhai, 519180 (CN)
(74) Representative: Murgitroyd & Company

(57) **Abstract**

The present invention relates to the technical field of batteries, in particular to a lithium-ion secondary battery. The lithium-ion secondary battery comprises an electrode assembly having an arc-shaped region and a flat and straight region; the ratio of the thickness of the electrode assembly to the size L of the flat and straight region in the length direction of the electrode assembly is (0.03-0.5): 1; the electrode assembly comprises a positive electrode plate, a separator and a negative electrode plate which are stacked and wound; the positive electrode plate comprises a nickel-cobalt-manganese ternary material; the negative electrode plate comprises a silicon-carbon material, wherein the mass content of silicon element in the silicon-carbon material is 35%-70%. An electrolyte comprises fluoroethylene carbonate, and the mass content of fluoroethylene carbonate in the electrolyte is 2%-20%. The electrode plates of the lithium-ion secondary battery have better safety performance and cycling stability.

## Description

### TECHNICAL FIELD

The present invention relates to the technical field of batteries, in particular to a lithium-ion secondary battery.

### BACKGROUND

As an important part of sustainable energy, battery technologies have greatly promoted the sustainable development of society and the convenience and intelligence of human life. In order to obtain a higher energy density, a ternary material and a silicon-carbon material are often used in combination in a battery. However, during the lithium intercalation and de-intercalation, the volume change of the silicon-carbon material is relatively large, which is easy to cause an electrode plate to break, especially in a wound battery. The first three-fold electrode plate inside the wound core is easy to break during cycling. After the electrode plate is broken, a foil of a current collector is easy to produce burrs, and the short circuit of the battery cell will occur when the burrs pierce the separator and connect the positive and negative electrodes, which will lead to an explosion or fire, so the safety performance of the battery is relatively poor.

Therefore, how to improve the cycling stability and safety performance of a lithium-ion secondary battery while ensuring a larger energy density is an urgent technical problem to be addressed.

### SUMMARY

An object of the present invention is to overcome the aforementioned problems in the prior art and provide a lithium-ion secondary battery. By controlling the relationship between the thickness of the electrode assembly and the size of the flat and straight region in the length direction of the electrode assembly, the pressure of the electrode plate in the arc-shaped region on both sides of the electrode assembly can be reduced, and under the premise of not losing or losing less energy density, it can ensure that the electrode plate of the lithium-ion secondary battery (hereinafter referred to as "battery") are not easy to break during cycling, thereby improving the safety performance of the battery. In addition, the cycling stability of the battery can be further improved by using the positive electrode plate (including a nickel-cobalt-manganese ternary material) and the negative electrode plate (including a silicon-carbon material) in combination, such that the battery has a higher energy density, and the safety performance and cycling stability thereof are also improved.

The present invention provides a lithium-ion secondary battery comprising an electrode assembly in which a positive electrode plate, a separator and a negative electrode plate are stacked and wound, and the electrode assembly has an arc-shaped region and a flat and straight region; the ratio of the thickness of the electrode assembly to the size L of the flat and straight region in the length direction of the electrode assembly is (0.03-0.5): 1; the positive electrode plate comprises a positive electrode active material, the positive electrode active material comprises a nickel-cobalt-manganese ternary material, and the nickel-cobalt-manganese ternary material comprises a material with a chemical formula of LiaNixCoyMnzMbO2, with 0.9 ≤ a ≤ 1.1, 0.5 ≤ x ≤ 0.95, 0 < y ≤ 0.3, 0 < z ≤ 0.3, 0 ≤ b ≤ 0.05, M being selected from at least one of Al, Zr, B, Mg, B, Y, Sr, W, Ti and Nb; the negative electrode plate comprises a negative electrode active material, the negative electrode active material comprises a silicon-carbon material, and the mass content of silicon element in the silicon-carbon material is 35%-70%; the lithium-ion secondary battery further comprises an electrolyte, the electrolyte comprises fluoroethylene carbonate, and the mass content of the fluoroethylene carbonate in the electrolyte is 2%-20%.

By means of the above technical solution, the present invention has at least the following advantages over the prior art:
(1) in the lithium-ion secondary battery of the present invention, the matching degree between the electrode assembly and the silicon-carbon material is higher, the stress on the electrode plate in the arc-shaped region on both sides of the electrode assembly can be reduced, such that the electrode plate maintains a stronger toughness and is not easy to break during the cycling of the battery, and the safety performance is higher;
(2) in the lithium-ion secondary battery of the present invention, the active material of the positive electrode plate includes a nickel-cobalt-manganese ternary material with a high gram capacity, and the negative electrode plate includes a silicon-carbon material with a high gram capacity, the energy density of the battery can be improved, and the nickel-cobalt-manganese ternary material has a higher high-temperature cycling stability, such that the battery can have both high energy density and high cycling stability;
(3) the electrolyte in the lithium-ion secondary battery of the present invention comprises fluoroethylene carbonate, which can form a CEI film with a higher strength on the surface of the silicon-carbon material, thereby reducing the expansion of the silicon-carbon material, reducing the adverse influence of the expansion of the silicon-carbon material on the electrode plate in the arc-shaped region on both sides, and also improving the high-temperature cycling performance of the battery.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values of various ranges and individual point values, and between individual point values, and these numerical value ranges should be regarded as specifically disclosed herein.

### BRIEF DESCRIPTION OF THE DRAWINGS

FIG. 1 is a structural schematic front view of an electrode assembly of the present invention.
FIG. 2 is a structural schematic top view of an electrode assembly of the present invention.
FIG. 3 is a schematic view of the stack of an electrode assembly of the present invention (unwound).
FIG. 4 is a SEM image of the cross section of a positive electrode plate in an embodiment of the present invention.

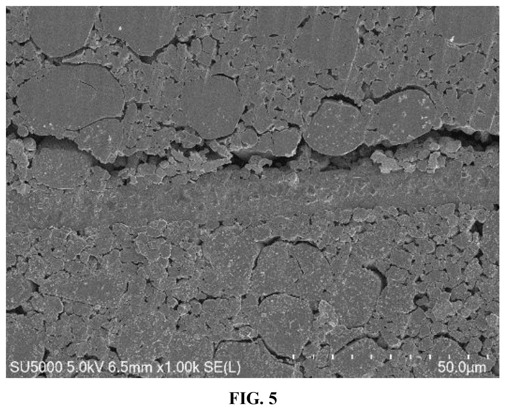

FIG. 5 is a SEM image of the cross section of a positive electrode plate in an embodiment of the present invention.

### DETAILED DESCRIPTION OF THE EMBODIMENTS

Hereinafter, specific embodiments of the present invention will be described in detail. It should be understood that the specific embodiments described herein are only used to illustrate and explain the present invention and are not used to limit the present invention.

Unless otherwise defined, all scientific and technical terms used in the present invention have the same meanings as commonly understood by those skilled in the technical field to which the present invention relates.

The present invention provides a lithium-ion secondary battery comprising an electrode assembly in which a positive electrode plate, a separator and a negative electrode plate are stacked and wound, and the electrode assembly has an arc-shaped region and a flat and straight region; the ratio of the thickness of the electrode assembly to the size L of the flat and straight region in the length direction of the electrode assembly is (0.03-0.5): 1, such as 0.03, 0.05, 0.1, 0.2, 0.3, 0.4 or 0.5; the positive electrode plate comprises a positive electrode active material, the positive electrode active material comprises a nickel-cobalt-manganese ternary material, and the nickel-cobalt-manganese ternary material comprises a material with a chemical formula of LiaNixCoyMnzMbO2, with 0.9 ≤ a ≤ 1.1 (for example, 0.9, 0.95, 1, 1.05 or 1.1), 0.5 ≤ x ≤ 0.9 (for example, 0.5, 0.6, 0.7, 0.8 or 0.9), 0 < y ≤ 0.3 (for example, 0.05, 0.1, 0.15, 0.2, 0.25 or 0.3), 0 < z ≤ 0.3 (for example, 0.05, 0.1, 0.15, 0.2, 0.25 or 0.3), 0 ≤ b ≤ 0.05 (for example, 0, 0.01, 0.02, 0.03, 0.04 or 0.05), M being selected from at least one of Al, Zr, B, Y, Sr, W, Ti and Nb; the negative electrode plate comprises a negative electrode active material, and the negative electrode active material comprises a silicon-carbon material; the mass content of silicon element in the silicon-carbon material is 35%-70% (for example, 35%, 38%, 40%, 43%, 45%, 48%, 50%, 53%, 55%, 58%, 60%, 63%, 65%, 68% or 70%); the lithium-ion secondary battery further comprises an electrolyte, the electrolyte comprises fluoroethylene carbonate, and the mass content of the fluoroethylene carbonate in the electrolyte is 2%-20% (for example, 2%, 5%, 7%, 10%, 12%, 15%, 17% or 20%).

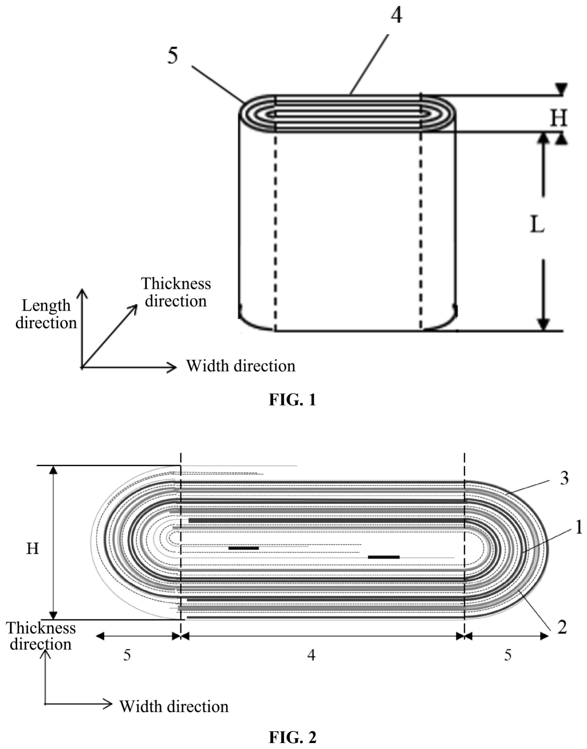

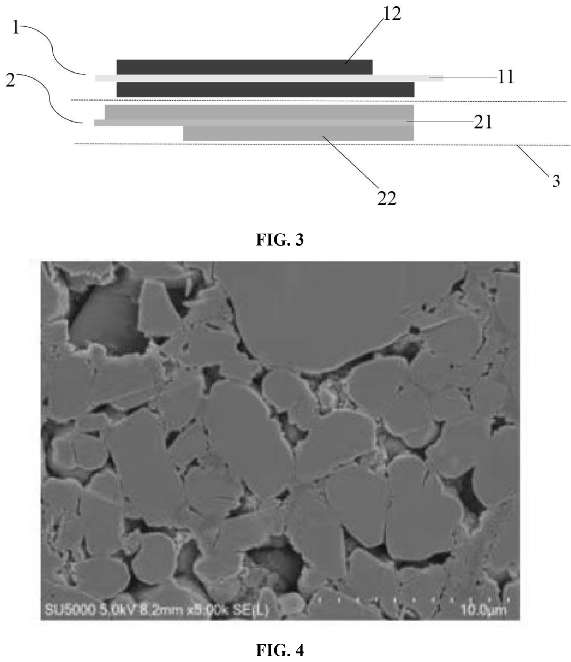

As shown in FIG. 1, FIG. 2 and FIG. 3, the electrode assembly is formed by stacking and winding a positive electrode plate 1, a separator 3 and a negative electrode plate 2, and has an arc-shaped region 5 and a flat and straight region 4, wherein the arc-shaped region 5 is a region where bending occurs and the flat and straight region 4 is a region where bending does not occur based on the innermost two folds of the electrode assembly. As can be seen from FIG. 1 and FIG. 2, the electrode assembly includes two arc-shaped regions and one flat and straight region, wherein the two arc-shaped regions are located on both sides of the electrode assembly in the width direction, respectively, and the flat and straight region is located in the middle region of the electrode assembly in the width direction. The thickness H of the electrode assembly refers to the diameter of the outermost arc of the arc-shaped region, that is, the distance in the thickness direction between two tangents along the outermost arc of the arc-shaped region. The size L of the flat and straight region in the length direction of the electrode assembly is the length of the flat and straight region in the length direction of the electrode assembly. As can be seen from FIG. 3, the positive electrode plate 1 comprises a positive electrode current collector 11 and a positive electrode active material layer located on the surface of at least one side of the positive electrode current collector 11, and the negative electrode plate 2 comprises a negative electrode current collector 21 and a negative electrode active material layer 22 located on the surface of at least one side of the negative electrode current collector 21.

The positive electrode active material of the positive electrode plate of the present invention comprises a nickel-cobalt-manganese ternary material, and the negative electrode active material of the negative electrode plate comprises a silicon-carbon material, such that both the positive electrode plate and the negative electrode plate have a higher gram capacity, and the energy density of the battery is improved; and the nickel-cobalt-manganese ternary material has a better high-temperature cycling stability, which can further improve the cycling stability of the battery, thereby improving the safety performance and cycling stability of the battery while maintaining a higher energy density. When the ratio of the thickness of the electrode assembly to the size L of the flat and straight region in the length direction of the electrode assembly is controlled to meet the above range, the matching degree of the thickness of the electrode assembly to the size of the flat and straight region in the length direction of the electrode assembly is higher, and under the premise of not losing or losing less energy density, the pressure of the electrode plate in the arc-shaped region on both sides can be reduced, and the electrode plate can maintain a higher toughness and is not easy to break during cycling, such that the positive electrode current collector (for example, a foil) is not easy to generate burrs and pierce the separator, and it is not easy to cause short circuit of the battery cell. Moreover, due to the larger volume change of the silicon-carbon material during lithium intercalation and de-intercalation, the electrode plate in the arc-shaped region on both sides are under a greater pressure. In the present invention, by controlling the mass content of silicon element in the silicon-carbon material, the matching degree between the electrode assembly and the silicon-carbon material is improved, such that in the battery assembly of the present invention, the pressure on the electrode plate in the arc-shaped region on both sides due to the volume expansion of the silicon-carbon material can be reduced, which reduces the risk of electrode plate breaking and improve the safety performance of the battery. Especially for a multi-tab battery, the whole multi-tab battery is relatively thick, so with the increase of the thickness of the electrode assembly, the flat and straight region of the electrode assembly needs to have a certain length, so that the ratio of the thickness of the electrode assembly to the size of the flat and straight region in the length direction of the electrode assembly satisfies the above range. When the electrode assembly of the multi-tab battery does not satisfy the above range, the pressure of the electrode plate in the arc-shaped region on both sides of the electrode assembly of the multi-tab battery is higher, and the electrode plate is easy to break, which affects the safety performance and cycling stability of the battery.

When the ratio of the thickness of the electrode assembly to the size L of the flat and straight region in the length direction of the electrode assembly is lower than 0.03: 1, the size of the flat and straight region in the length direction of the electrode assembly is too long, the battery cell is thin and wide, and the tension at the four corners of the battery cell is larger. When the thickness expands, the four corners of the battery tilt in the same direction to form a pot cover shape, which causes the battery to deform, thereby affecting the expansion performance of the battery and improving the expansion rate of the battery; when the ratio of the thickness of the electrode assembly to the size L of the flat and straight region in the length direction of the electrode assembly is higher than 0.5: 1, the size of the flat and straight region in the length direction of the electrode assembly is too short, the pressure of the electrode plate in the arc-shaped region on both sides of the electrode assembly is higher, and the electrode plate is easy to break, which affects the safety performance and cycling stability of the battery.

In the present invention, the ratio of the thickness of the electrode assembly to the size L of the flat and straight region in the length direction of the electrode assembly can be realized by adjusting the thickness of the electrode assembly and/or the size L of the flat and straight region in the length direction of the electrode assembly.

The electrode assembly with the above characteristics helps to protect the negative electrode active material in combination with an electrolyte comprising fluoroethylene carbonate (the mass content of fluoroethylene carbonate in the electrolyte is 2%-20%), and fluoroethylene carbonate can form an SEI film with a higher mechanical stability on the surface of the negative electrode plate, thereby inhibiting the expansion of the silicon-carbon material and reducing the expansion performance of the electrode plate. Moreover, the content of LiF in the SEI film is higher, which can effectively inhibit the cracking and recombination of the SEI film at a high temperature, which is beneficial to improving the high-temperature cycling performance of the positive electrode. When the mass content of fluoroethylene carbonate in the electrolyte is more than 20%, the high-temperature cycling performance and storage and gas production performance of the battery cell will be deteriorated, which is not conducive to reducing the expansion performance of the electrode plate, so that the expansion rate of the battery is increased.

In some embodiment, the ratio of the thickness of the electrode assembly to the size L of the flat and straight region in the length direction of the electrode assembly is (0.05-0.2): 1.

In some embodiment, the thickness of the negative electrode plate in the arc-shaped region is greater than the thickness of the negative electrode plate in the flat and straight region. When the thickness of the negative electrode plate in the arc-shaped region is greater than the thickness of the negative electrode plate in the flat and straight region, it can be ensured that the structure of the silicon-carbon material in the negative electrode plate in the arc-shaped region at both sides of the electrode assembly will not fail due to overvoltage, resulting in lithium precipitation at the interface and affecting the cycling of the battery cell.

In the present invention, the thickness of the negative electrode plate includes the sum of the thickness of the negative electrode current collector and the thickness of the negative electrode active material layer, wherein when there is a negative electrode active material layer on the surface of one side of the negative electrode current collector, the thickness of the negative electrode active material layer is the thickness of the negative electrode active material layer on that side; when there are negative electrode active material layers on the surfaces of both sides of the negative electrode current collector, the thickness of the negative electrode active material layer is the sum of the thicknesses of the negative electrode active material layers on both sides.

In some examples, the positive electrode active material further comprises lithium cobaltate, and the mass ratio of the nickel-cobalt-manganese ternary material in the positive electrode active material is m, with 0% < m ≤ 50%, for example, 0.1%, 5%, 10%, 15%, 20%, 25%, 30%, 35%, 40%, 45% or 50%; the nickel-cobalt-manganese ternary material comprises single crystal particles and/or polycrystalline particles, and the average particle size of the nickel-cobalt-manganese ternary material is A, wherein A is 1-10 in µm, for example, 1 µm, 2µm, 3 µm, 4 µm, 5 µm or 6 µm; the positive electrode plate further comprises a positive electrode current collector, and the tensile strength of the positive electrode current collector is B, wherein B is 120-300 in MPa, for example, 120, 130, 140, 150, 160, 170, 180, 190, 200, 210, 220, 230, 240, 250, 260, 270, 280, 290 or 300; A and B satisfy: A/B is 0.004-0.05, for example, 0.004, 0.008, 0.01, 0.02, 0.03, 0.04 or 0.05.

In the present invention, by blending lithium cobaltate with the nickel-cobalt-manganese ternary material, the structural stability of the positive electrode active material under high-temperature cycling can be improved, thereby prolonging the high-temperature cycling life of the battery and improving the safety performance thereof under extreme conditions such as thermal shock and nail penetration. The specific reasons are as follows: in terms of safety performance, because the exothermic rate of the redox reaction of the nickel-cobalt-manganese ternary material in a delithiation state is slower in extreme cases (such as short circuit and combustion) (mainly because the step-by-step valence change reaction rate of nickel element is not as fast as the valence change rate of single element of cobalt in pure lithium cobaltate), the overall safety performance of the battery cell after blending is greatly improved; in terms of cycling performance, the addition of manganese in the nickel-cobalt-manganese ternary material stabilizes the stability of a layered structure in a high delithiation state, so the high-temperature cycling life of a blended material is better than that of pure lithium cobaltate; when the positive electrode active material comprises the nickel-cobalt-manganese ternary material and lithium cobaltate, and the mass ratio of the nickel-cobalt-manganese ternary material in the positive electrode active material satisfies 0% < m ≤ 50%, the gram capacity utilization of the positive electrode active material and the rate performance of the battery can be effectively improved, and the structural stability of the positive electrode active material under high-temperature cycling can also be improved, thereby prolonging the high-temperature cycling life of the battery and improving the safety performance of the battery under extreme conditions such as thermal shock and nail penetration. In addition, due to the scarcity of Co element in lithium cobaltate, the cost of its raw material (cobaltosic oxide) is higher, the contents of the Ni element and Mn element in the nickel-cobalt-manganese ternary material are higher, the raw material cost is lower, and the sintering processing temperature is lower, the cost of the blended positive electrode active material is lower in battery cells with the same gram capacity design after blending.

By controlling the relationship between the average particle size of the nickel-cobalt-manganese ternary material and the tensile strength of the positive electrode current collector, the toughness of the positive electrode plate can be improved, allowing the positive electrode plate to withstand a higher roller pressure (e.g., the roller pressure can be increased to 1000 T). **In** this case, even if the thickness of the positive electrode current collector is lower, the positive electrode plate is not easy to break under a higher roller pressure, such that the compacted density of the positive electrode plate can be improved. A higher compacted density and a smaller average particle size of the nickel-cobalt-manganese ternary material make the stacking density of the positive electrode active material layer higher, thereby shortening the transmission distance of lithium ions in the crystals and improving the low-temperature performance and rate performance of the battery. Moreover, a higher stacking density reduces the gaps among the particles of the nickel-cobalt-manganese ternary material, and reduces the direct contact sites between the electrolyte and the particles of the nickel-cobalt-manganese ternary material, thereby reducing the side reactions between the nickel-cobalt-manganese ternary material and the electrolyte under high-temperature cycling, and improving the cycling performance of the battery.

The mean particle size can be measured by a laser particle size analyzer.

In some examples, A/B is 0.008-0.042.

In some examples, A/B is 0.012-0.034.

In some examples, 20% ≤ m ≤ 40%.

In some examples, the nickel-cobalt-manganese ternary material comprises single crystal and/or polycrystalline particles, and the particle size number distribution of the nickel-cobalt-manganese ternary material is unimodal. When the particle size number distribution is unimodal, it shows that the particle size of the nickel-cobalt-manganese ternary material is relatively uniform, and it is possible to ensure that the compacted density of the positive electrode plate is relatively appropriate; when the particle size number distribution is bimodal, it shows that the particle size uniformity of the nickel-cobalt-manganese ternary material is relatively poor, and there are particles with a smaller particle size, which has certain influence on the compacted density of the positive electrode plate.

In some examples, the nickel-cobalt-manganese ternary material comprises single crystal particles and polycrystalline particles, the mass ratio of the single crystal particles to the polycrystalline particles is (90%-10%):(10%-90%). When the mass ratio of the single crystal particles to the polycrystalline particles is controlled to be in the above range, the combination of the single crystal particles and the polycrystalline particles is relatively appropriate, and the dynamic performance of the battery will not be affected by too many single crystal particles, nor will the high-temperature cycling performance be affected by too many polycrystalline particles, such that the dynamic performance of the battery can be improved, and the high-low temperature cycling performance and rate performance of the battery can be further improved.

It can be understood that in the nickel-cobalt-manganese ternary material, the mass ratio of single crystal particles can be in the range of 90%-10% (for example, 90%, 80%, 70%, 60%, 50%, 40%, 30%, 20% or 10%), and the mass ratio of polycrystalline particles can be in the range of 10%-90% (for example, 10%, 20%, 30%, 40%, 50%, 60%, 70%, 80% or 90%), but it needs to be satisfied that the sum of the mass ratios of single crystal particles and polycrystalline particles is 100%.

In some examples, the mass ratio of the single crystal particles to the polycrystalline particles is (50%-80%):(50%-20%).

In some examples, the average particle size A of the nickel-cobalt-manganese ternary material is 1 µm-10 µm. When the average particle size of the nickel-cobalt-manganese ternary material is controlled to be in the above range, it is beneficial to improve the compacted density of the positive electrode active material layer after the nickel-cobalt-manganese ternary material is blended with lithium cobaltate, thereby improving the energy density of the lithium-ion secondary battery.

In some examples, the average particle size A of the nickel-cobalt-manganese ternary material is 1 µm-10 µm.

In some examples, an average particle size of the polycrystalline particles is 1 µm-10 µm.

In some examples, an average particle size of the single crystal particles is 1 µm-10 µm.

In the present invention, the average particle diameter of the nickel-cobalt-manganese ternary material can be measured by the following method: disassembling an electrode assembly (battery cell) from a battery, taking a positive electrode plate, removing an adhesive tape and a welded tab from the electrode plate, and placing the positive electrode plate from which the adhesive tape and the tab are removed in a muffle furnace and calcining same under air atmosphere at 450°C for 4 h; after cooling to room temperature (25°C + 2), taking out the positive electrode plate and rubbing it (the rubbing force here is relatively small, only for the purpose of shedding the nickel-cobalt-manganese ternary material without crushing the nickel-cobalt-manganese ternary material), and collecting the shed positive electrode powder (the powder of the nickel-cobalt-manganese ternary material), and after ultrasonic treatment in deionized water for 1 h, measuring the particle size thereof with Malvin 3000 laser particle size analyzer to obtain the average particle size of the nickel-cobalt-manganese ternary material.

In some examples, the nickel-cobalt-manganese ternary material comprises transition metal elements, and in the nickel-cobalt-manganese ternary material, the molar ratio of nickel in the transition metal elements is 50%-90%, for example, it can be 50%, 54%, 58%, 60%, 64%, 68%, 70%, 74%, 78%, 80%, 84%, 88% or 90%. In the nickel-cobalt-manganese ternary material, the molar ratio of nickel in the transition metal elements is controlled to be in the above range, which can improve the stability of the nickel-cobalt-manganese ternary material, and can also make the average particle size of the nickel-cobalt-manganese ternary material more appropriate.

In some examples, the compacted density of the positive electrode plate is greater than or equal to 3.45 g/cm3. When the compacted density is controlled to be in the above range, the energy density of the lithium-ion secondary battery can be improved. The testing method of the compacted density comprises measuring the thickness of the electrode plate using ten-thousandth micrometer and calculating the compacted density with the electrode plate areal density, wherein the areal density of the electrode plate can be measured by the following method: a positive electrode plate of 1 cm2 is cut out and the weight thereof is weighed as W1, and the weight of the positive electrode current collector is measured as W2 after scraping off the positive electrode active material layer, so the areal density is (W1-W2)/1.

In some examples, the nickel-cobalt-manganese ternary material comprises one or more of LiNi_{0.5}Co_{0.2}Mn_{0.3}O₂, LiNi_{0.6}Co_{0.2}Mn_{0.2}O₂, LiNi_{0.6}Co_{0.1}Mn_{0.3}O₂, LiNi_{0.7}Co_{0.1}Mn_{0.2}O₂, LiNi_{0.65}Co_{0.15}Mn_{0.2}O₂ and LiNi_{0.68}Co_{0.09}gMn_{0.23}O₂.

In some examples, the nickel-cobalt-manganese ternary material comprises LiNi0.6Co0.1Mn0.3O2.

In some examples, the specific surface area of the nickel-cobalt-manganese ternary material is 0.6 m²/g-1 m²/g, for example, it can be 0.6 m²/g, 0.7 m²/g, 0.8 m²/g, 0.9 m²/g or 1 m²/g. When the specific surface area of the nickel-cobalt-manganese ternary material is in the above range, it is beneficial to reduce the contact sites between the material and the electrolyte, reduce side reactions and improve the cycling performance. The specific surface area can be directly measured by a specific surface area tester.

In some examples, the residual alkali content of the nickel-cobalt-manganese ternary material is less than or equal to 2000 ppm. The residual alkali content of the nickel-cobalt-manganese ternary material refers to the content of alkaline compounds remaining on the surface of the material, mainly including lithium hydroxide (LiOH) and lithium carbonate (Li₂CO₃). The sum of the contents of lithium hydroxide and lithium carbonate in the nickel-cobalt-manganese ternary material is less than or equal to 2000 ppm. The residual alkali content can be measured by potentiometric titration.

In some examples, the mass content of aluminum element (Al) in the nickel-cobalt-manganese ternary material is 1000 ppm-2500 ppm (for example, 1000 ppm, 1200 ppm, 1500 ppm, 1700 ppm, 2000 ppm, 2200 ppm or 2500 ppm). In the nickel-cobalt-manganese ternary material, Al can exist as a doping element.

In some examples, the mass content of titanium element (Ti) in the nickel-cobalt-manganese ternary material is 500 ppm-1000 ppm (for example, 500 ppm, 600 ppm, 700 ppm, 800 ppm, 900 ppm or 1000 ppm). In the nickel-cobalt-manganese ternary material, Ti can exist in a cladding form.

In some examples, the mass content of tungsten element (W) in the nickel-cobalt-manganese ternary material is 2000 ppm-4000 ppm (for example, 2000 ppm, 2300 ppm, 2500 ppm, 2800 ppm, 3000 ppm, 3300 ppm, 3500 ppm, 3800 ppm or 4000 ppm). In the nickel-cobalt-manganese ternary material, W can exist in a cladding form.

In some examples, the positive electrode plate comprises a positive electrode active material, and the positive electrode active material comprises a nickel-cobalt-manganese ternary material and lithium cobaltate; the negative electrode plate comprises a negative electrode active material, and the negative electrode active material comprises a silicon-carbon material. The silicon-carbon material has a higher gram capacity than graphite, and it has a higher energy density when combined with lithium cobaltate and the nickel-cobalt-manganese ternary material, and it can also improve the high-temperature cycling stability of the battery and improve the safety performance of the battery under extreme conditions such as thermal shock and nail penetration. But it also increases the risk of electrode plate breakage. When the nickel-cobalt-manganese ternary material and lithium cobaltate are used in combination with the electrode assembly of the present invention, the stress on the electrode plate in the arc-shaped region on both sides of the electrode assembly which is easy to break can be reduced by controlling the ratio of the thickness of the electrode assembly to the size of the flat and straight region in the length direction of the electrode assembly, such that the electrode plate can still maintain a higher toughness, and the electrode plate can still withstand the risk of deterioration and breakage caused by the combination of lithium cobaltate and the nickel-cobalt-manganese ternary material, which will further make the battery not easy to break and improve the safety performance of the battery.

In some examples, the lithium cobaltate comprises first particles and second particles, and the average particle size of the first particles is larger than that of the second particles. In the present invention, the test method of the average particle size of the first particles and the average particle size of the second particles can refer to the test method of the average particle size of the nickel-cobalt-manganese ternary material.

In some examples, the ratio of the average particle size of the first particles to the average particle size of the second particles is (2.1-8.5): 1. When the ratio of the average particle size of the first particles to the average particle size of the second particles is controlled to be in the above range, it is beneficial for the second particles to be evenly distributed in the pores formed among the first particles, thereby increasing the compacted density of the positive electrode active material layer and increasing the energy density of the battery.

In some examples, the average particle size of the first particles is 10 µm-30 µm, for example, 10 µm, 15 µm, 20 µm, 25 µm or 30 µm, and the average particle size of the second particles is 2 µm-10 µm, for example, 2 µm, 4 µm, 6 µm, 8 µm or 10 µm.

In some examples, the mass ratio of the first particles to the second particles is (50%-99%): (50%-1%). When the mass ratio of the first particles to the second particles is controlled to be in the above range, it is beneficial to increase the compacted density of the positive electrode active material layer and the energy density of the battery.

It can be understood that the mass ratio of the first particles in lithium cobaltate can be in the range of 50%-99% (for example, 50%, 55%, 60%, 65%, 70%, 75%, 80%, 85%, 90%, 95% or 99%), and the mass ratio of the second particles in lithium cobaltate can be in the range of 50%-1% (for example, 50%, 45%, 40%, 35%, 30%, 25%, 20%, 15%, 10%, 5% or 1%), but it needs to be satisfied that the sum of the mass ratio of the first particles and the mass ratio of the second particles in lithium cobaltate is 100%.

In some examples, the mass ratio of the first particles to the second particles is (70%-80%):(30%-20%).

In some examples, the first particles and/or the second particles are doped with aluminum element.

In some examples, the content of the aluminum element in the first particles is 6000 ppm-8000 ppm.

In some examples, the content of the aluminum element in the second particles is 5000 ppm-7000 ppm.

In some examples, the positive electrode active material comprises a nickel-cobalt-manganese ternary material and lithium cobaltate, wherein in the positive electrode active material, the content of Mg is 500-1000 ppm, the content of Y is 1000-1500 ppm, and the content of Zr is 1000-1500 ppm.

In some examples, the positive electrode current collector comprises a first substrate layer and a first metal layer located on the surfaces of both sides of the first substrate layer, and the first substrate layer comprises a first polymer. The first polymer of the first substrate layer helps to reduce metal elongation, and the addition of the first substrate layer helps to avoid metal fatigue effect after being folded in half for many times, such that the positive electrode current collector is not easy to break, and the toughness of the electrode plate is enhanced. In addition, under a high rolling pressure, the first substrate layer has certain deformation elasticity, which can alleviate the deformation of the positive electrode current collector and make it have good supporting performance. In addition, the first substrate layer has a higher melting point, and in extreme cases, it has higher safety performance. The positive electrode current collector with the above structure can increase the upper limit of the rolling pressure that the positive electrode plate can withstand, so that the positive electrode plate is not easy to break. In addition, the positive electrode plate is folded in half twice after rolling, and the crease is opaque, which meets the toughness requirements of the electrode plate in lithium battery mass production, and the positive electrode plate can adapt to the extrusion under a high external pressure and does not break to produce metal burrs, thereby improving the safety performance of the battery cell.

In some examples, the first polymer comprises at least one of polypropylene, polyethylene, polyterephthalate, polyethylene naphthalate, polyimide, polycarbonate, polyvinyl chloride, polyvinylidene fluoride, polystyrene, polytetrafluoroethylene, polyvinyl alcohol and modified polymers of the above substances.

In some examples, the first metal layer comprise aluminum.

In some examples, the thickness of the first substrate layer is 2 µm-28 µm, for example, 2 µm, 5 µm, 10 µm, 15 µm, 20 µm, 25 µm or 28 µm.

In some examples, the thickness of the first substrate layer is 2.5 µm-10 µm.

In some examples, the thickness of the first metal layer is 0.5 µm-2.5 µm, for example, 0.5 µm, 1 µm, 1.5 µm, 2 µm or 2.5 µm.

In some examples, the thickness of the first metal layer is 1 µm-2 µm.

In the present invention, the thickness of the first metal layer is the thickness of the first metal layer on one side. For example, when the first metal layer is located on the surface of one side of the first substrate layer, the thickness of the first metal layer is the thickness of the first metal layer on that side (that is, the side with the first metal layer); when the first metal layer is located on the surfaces of both sides of the first substrate layer, the thickness of the first metal layer on both sides is the same, and the thickness of the first metal layer is the thickness of the first metal layer on one side.

In some examples, the thickness of the positive electrode current collector is 3 µm-30 µm, for example, 3 µm, 5 µm, 10 µm, 15 µm, 20 µm, 25 µm or 30 µm. The thickness of the positive electrode current collector is the overall thickness of the positive electrode current collector, for example, when the first metal layer is located on the surface of one side of the first substrate layer, the thickness of the positive electrode current collector is the sum of the thickness of the first substrate layer and the thickness of the first metal layer on one side (that is, the side with the first metal layer); when the first metal layer is located on the surfaces of both sides of the first substrate layer, the thickness of the positive electrode current collector is the sum of the thickness of the first substrate layer and the thicknesses of the first metal layers on both sides.

In some examples, the thickness of the positive electrode current collector is 4 µm-14 µm.

In some examples, the elongtation of the positive electrode current collector is 0.5%-1.8% (for example, 0.5%, 0.6%, 0.7%, 0.8%, 1%, 1.3%, 1.5% or 1.8%). The method for testing the elongation at tensile break is as follows: stretching the positive electrode current collector in the range of tensile strength B, measuring the length of the positive electrode current collector as L1 before stretching, and the length of the positive electrode current collector at tensile break as L2, so that the elongation of the positive electrode current collector is [(L2-L1)/L1] × 100%.

In some examples, the elongation of the positive electrode current collector is 0.5%-0.8%.

In some examples, the positive electrode active material further comprises lithium cobaltate, and the mass ratio of the nickel-cobalt-manganese ternary material in the positive electrode active material is m, with 0% < m ≤ 50%; the nickel-cobalt-manganese ternary material comprises single crystal particles, and the average particle size of the single crystal particles is A, wherein A is 1-10 in µm; the positive electrode plate further comprises a positive electrode current collector, and the tensile strength of the positive electrode current collector is B, wherein B is 120-300 in MPa; A and B satisfy: A/B is 0.004-0.05, and the positive electrode current collector comprises a first substrate layer and a first metal layer located on the surfaces of both sides of the first substrate layer, the first polymer of the first substrate layer comprises at least one of polypropylene, polyethylene, polyterephthalate, polyethylene naphthalate, polyimide, polycarbonate, polyvinyl chloride, polyvinylidene fluoride, polystyrene, polytetrafluoroethylene, polyvinyl alcohol and derivatives thereof. Due to the smaller average particle size of the nickel-cobalt-manganese ternary material in the form of the single crystal particles, when combined with the positive electrode current collector of the present invention to which the polymer is added, the positive electrode plate can have higher toughness and will not break, and can withstand a larger pressure, which will reduce the risk of the positive electrode plate breaking when subjected to a larger pressure in the arc-shaped region on both sides, and improve the safety performance of the battery.

In some examples, the positive electrode plate comprises a positive electrode current collector and a positive electrode active material layer located on the surface of one side or both sides of the positive electrode current collector, wherein the positive electrode active material layer comprises a positive electrode active material, a positive electrode binder, and a positive electrode conductive agent.

In some examples, the positive electrode binder comprises one or more of polyvinylidene fluoride (PVDF), acrylic modified PVDF, a polyacrylate polymer, polytetrafluoroethylene, a perfluorosulfonic acid ionomer, polyacrylonitrile, polyimide, styrene-butadiene rubber and styrene-acrylic rubber.

In some embodiment, the positive electrode conductive agent comprises one or more of carbon black and carbon nanotubes.

In some examples, based on the total weight of the positive electrode active material layer, the weight content of the positive electrode active material is 90%-99% (for example, 90%, 91%, 92%, 93%, 94%, 95%, 96%, 97%, 98% or 99%), the weight content of the positive electrode conductive agent is 0.1%-5% (for example, 0.1%, 0.5%, 1%, 2%, 3%, 4% or 5%), and the weight content of the positive electrode binder is in a range of 0.1%-5% (for example, 0.1%, 0.5%, 1%, 2%, 3%, 4% or 5%).

In some examples, the positive electrode plate further comprises a positive electrode tab extending from the positive electrode current collector along the width direction of the positive electrode plate, and the positive electrode tab is electrically connected with the positive electrode current collector, and the number of the positive electrode tab is greater than or equal to 2.

In some examples, the lithium-ion secondary battery further comprises a negative electrode plate including a negative electrode tab, and the number of the negative electrode tab is greater than or equal to 2.

Because the negative electrode active material of the silicon-carbon material and the positive electrode active material of the nickel-cobalt-manganese ternary material are relatively poor in conductivity (compared with graphite and lithium cobaltate), there are shortcomings in dynamics, and the multi-tab battery cell structure can reduce the internal resistance of the battery cell to a greater extent by means of a similar parallel connection and reduce the adverse effects caused by polarization.

The current collectors of the positive and negative electrode plates are provided with soft tabs in the width direction of the electrode plates, which are uniformly welded to the aluminum/nickel tabs after winding. During charging and discharging, the currents in different regions are simultaneously output through a plurality of soft tabs on the corresponding current collector, which is equivalent to a plurality of regions being connected in parallel. Compared with a single tab welding structure, the electronic transmission path is shortened, the overall electronic transfer impedance of the battery cell is effectively reduced, which helps to improve the rate performance and low-temperature discharge performance of the battery cell.

In some examples, the positive electrode active material comprises the nickel-cobalt-manganese ternary material and lithium cobaltate, the positive electrode plate further comprises a positive electrode tab extending from the positive electrode current collector along the width direction of the positive electrode plate, and the positive electrode tab is electrically connected with the positive electrode current collector, and the number of the positive electrode tab is greater than or equal to 2; the lithium-ion secondary battery further comprises a negative electrode plate, the negative electrode plate comprises a negative electrode tab extending from the negative electrode current collector along the width direction of the negative electrode plate, and the negative electrode tab is electrically connected with the negative electrode current collector, and the number of the negative electrode tab is greater than or equal to 2. Due to the significant changes in the valence of transition metals during charging and discharging, the rate performance and low-temperature discharge capacity retention rate of the nickel-cobalt-manganese ternary material are weaker than those of lithium cobaltate, and when lithium cobaltate is blended with the nickel-cobalt-manganese ternary material together with a multi-tab structure, the overall rate performance and low-temperature discharge performance of the battery cell can be further improved.

In some examples, the negative electrode plate further comprises a negative electrode current collector and a negative electrode active material layer located on the surface of at least one side of the negative electrode current collector; the negative electrode active material layer comprises the negative electrode active material, and the negative electrode active material further comprises a silicon-carbon material. The silicon-carbon material comprises silicon element.

In some examples, the silicon-carbon material comprises a porous carbon matrix and a silicon material located in pores inside the porous carbon matrix.

In some examples, the porous carbon matrix comprises carbon nanotubes (for example, multi-wall carbon nanotubes and/or single-wall carbon nanotubes).

In one example, the negative electrode active material further comprises a graphite material, and the graphite material comprises artificial graphite and/or natural graphite.

In some examples, the mass content c of the silicon element in the negative electrode active material layer is 1.5%-22% (for example, 1.5%, 5%, 8%, 10%, 13%, 18%, 20% or 22%).

In some examples, the mass content of the silicon-carbon material in the negative electrode active material is 5%-30%, for example, 5%, 10%, 15%, 20%, 25% or 30%. When the mass content of the silicon-carbon material in the negative electrode active material is controlled to be in the above range, it is beneficial to increase the gram capacity of the negative electrode plate, thereby increasing the overall energy density of the battery cell.

In some examples, the silicon-carbon material has a volume distribution particle size Dv10 of 1 µm-6 µm, Dv50 of 6 µm-15 µm, and Dv90 of 12 µm-30 µm. When the volume distribution particle size of the silicon-carbon material satisfies the above range, it is beneficial to increase the gram capacity of the negative electrode plate and the overall energy density of the battery cell.

In some examples, the negative electrode current collector comprises a second substrate layer and a second metal layer located on the surfaces of both sides of the second substrate layer; the second substrate layer comprises a second polymer; the mass content c of the silicon element in the negative electrode active material layer and the thickness T1 of the second metal layer satisfy: c/T1 is 2-13 (for example, 2, 3, 4, 5, 6, 7, 8, 9, 10, 11, 12 or 13).

In some examples, c/T1 is 2.5-9.

In the present invention, the thickness of the second metal layer is the thickness of the second metal layer on one side. For example, when the second metal layer is located on the surface of one side of the second substrate layer, the thickness of the second metal layer is the thickness of the second metal layer on that side (that is, the side with the first metal layer); when the second metal layer is located on the surfaces of both sides of the second substrate layer, the thickness of the second metal layer on both sides is the same, and the thickness of the second metal layer is the thickness of the second metal layer on one side.

In some examples, the VOI value of the negative electrode active material layer and the thickness T2 of the negative electrode current collector satisfy: VOI/T2 is 0.5-8 (for example, 0.5, 1, 2, 3, 4, 5, 6, 7 or 8). The VOI value refers to the value of the oxidation induction period of the graphite negative electrode. The VOI value can be obtained from the XRD spectrum of the negative electrode plate. The VOI value is the ratio of the intensities of the (004) diffraction peak and the (110) diffraction peak in the XRD spectrum, that is OI = 1(004)(110), the diffraction angle of the 004 peak is about 54°-55°, and the diffraction peak angle of the 110 crystal plane is about 77°-78°. The VOI value is directly related to the completeness of the crystal structure of the negative electrode active material. The larger the VOI value, the more complete the crystal structure, the higher the electron cloud density and the more stable the chemical properties, which is more conducive to improving the intercalation and deintercalation rates of lithium ions. However, the larger the VOI value, the higher the compacted density of the negative electrode plate, and the greater the thickness of the negative electrode current collector to be used, that is, the thickness of the second substrate layer and the second metal layer also needs to be increased, otherwise the electrode plate will be easily broken by rolling. However, if the thickness of the negative electrode current collector is too large, it is easy to reduce the energy density of the battery cell. Therefore, it is necessary to control the relationship between the VOI of the negative electrode active material layer and the thickness T2 of the negative electrode current collector, so that the matching degree between them is higher. When the VOI value of the negative electrode active material layer and the thickness of the negative electrode current collector meet the above relationship, the negative electrode active layer has a high gram capacity while maintaining a higher energy density, and the problems of high lithium intercalation caused by the high gram capacity, and further a high expansion force of the negative electrode can also be alleviated, which is helpful to relieve the stress on the electrode plate caused by the expansion of the battery cell, prevent the deformation of the electrode plate, relieve the volume deformation of the battery cell and improve the comprehensive performance of the battery cell.

In some examples, VOI/T2 is 0.7-6.

In the present invention, the thickness of the negative electrode current collector is the overall thickness of the negative electrode current collector, for example, when the second metal layer is located on the surface of one side of the second substrate layer, the thickness of the negative electrode current collector is the sum of the thickness of the second substrate layer and the thickness of the second metal layer on one side (that is, the side with the second metal layer). When the second metal layer is located on the surfaces of both sides of the second substrate layer, the thickness of the negative electrode current collector is the sum of the thickness of the second substrate layer and the thicknesses of the second metal layers on both sides.

In some examples, the VOI value of the negative electrode active material layer is 5-30.

In some examples, the second metal layer comprises Cu.

In some examples, the second substrate layer comprises a second polymer, and the second polymer comprises at least one of polypropylene, polyethylene, polyterephthalate, polyethylene naphthalate, polyimide, polycarbonate, polyvinyl chloride, polyvinylidene fluoride, polystyrene, polytetrafluoroethylene, polyvinyl alcohol and modified polymers of the above substances.

In some examples, the negative electrode plate comprises a positive electrode current collector and a negative electrode active material layer located on the surface of one side or both sides of the negative electrode current collector, wherein the negative electrode active material layer comprises a negative electrode active material, a negative electrode binder, and a negative electrode conductive agent.

In some examples, the negative electrode conductive agent comprises conductive carbon black and/or acetylene black.

In some examples, the negative electrode binder comprises one or more of styrene-butadiene rubber (SBR), lithium carboxymethyl cellulose (CMC-Li), and sodium carboxymethyl cellulose (CMC-Na).

In some examples, based on the total weight of the negative electrode active material layer, the weight content of the negative electrode active material is 90%-99% (for example, 90%, 91%, 92%, 93%, 94%, 95%, 96%, 97%, 98% or 99%), the weight content of the negative electrode binder is in a range of 1%-10% (for example, 1%, 2%, 3%, 4%, 5%, 6%, 7%, 8%, 9% or 10%), and the weight content of the negative electrode conductive agent is 0-5% (for example, 0, 0.1%, 0.5%, 1%, 2%, 3%, 4% or 5%).

In some examples, the lithium-ion secondary battery further comprise an electrolyte, and the electrolyte comprises fluoroethylene carbonate.

In some examples, the electrolyte further comprises a lithium salt, an organic solvent, and an additive.

In some examples, the lithium salt comprises one or more of lithium hexafluorophosphate (LiFP6), lithium tetrafluoroborate (LiBF4), Lithium bis(oxalate)borate (LiBOB), llithium bis(trifluoromethanesulfonyl)imide (LiTFSI), lithium difluoro(oxalato)borate (LiODFB), and lithium bis(fluorosulfonyl)imide (LiFSI).

In some examples, the organic solvent comprises one or more of propylene carbonate (PC), ethylene carbonate (EC), diethyl carbonate (DEC), dimethyl carbonate (DMC) and methyl ethyl carbonate (EMC).

In some examples, the additive comprises vinylene carbonate (VC).

In some examples, based on the total weight of the electrolyte, the weight content of the lithium salt is 10 wt%-25 wt% (for example, 10%, 13%, 15%, 18%, 20%, 23% or 25%), the weight content of the organic solvent is 50 wt%-80 wt% (for example, 50%, 55%, 60%, 65%, 70%, 75% or 80%), and the weight content of the additive is 10 wt%-30 wt% (for example, 10%, 15%, 20%, 25% or 30%).

The present invention will be described in detail below by means of examples. The examples described in the present invention are only some, rather than all, of the examples of the present invention. Based on the examples in the present invention, all other examples obtained by those of ordinary skill in the art without involving creative effort belong to the scope of protection of the present invention.

In the following examples, unless otherwise specified, all the materials used are commercially available and analytically pure.

The following examples are used to illustrate the lithium-ion secondary battery of the present invention.

### Example 1

### (1) Positive electrode plate

Ingredient preparation: positive electrode current collector: the positive electrode current collector comprised a first substrate layer and a first metal layer located on the surfaces of both sides of the first substrate layer, wherein the first substrate layer: polypropylene (PP) with a thickness of 6 µm, and the first metal layer: an aluminum foil with a thickness of 1.5 µm; wherein the tensile strength B of the positive electrode current collector was 250 MPa and the elongation of the positive electrode current collector was 0.7%;
positive electrode active material: 97.3 parts by weight of a nickel-cobalt-manganese ternary material (with a chemical formula of LiNi0.6Co0.096Mn0.299Al0.005O2, and the average particle size A of the nickel-cobalt-manganese ternary material was 3.62 µm) and a lithium cobaltate material (wherein the mass ratio m of the nickel-cobalt-manganese ternary material was 40% and the mass ratio of the lithium cobaltate material was 60%) in total, a positive electrode binder: PVDF, 1.1 parts by weight, a positive electrode conductive agent: 1.6 parts by weight of carbon nanotubes and carbon black in total (wherein 0.7 parts by weight of carbon nanotubes and 0.9 parts by weight of carbon black);
wherein A/B = 3.62/250 = 0.01448, and the nickel-cobalt-manganese ternary material comprised single crystal particles and polycrystalline particles, with the average particle size of the single crystal particles being 3.8 µm and the average particle size of the polycrystalline particles being 3.2 µm, and the mass ratio of the single crystal particles to the polycrystalline particles being 70%: 30%, in the nickel-cobalt-manganese ternary material, the mass ratio of nickel in the transition metal elements was 60%, the residual alkali content of the nickel-cobalt-manganese ternary material was 900 ppm, and the specific surface area of the nickel-cobalt-manganese ternary material was 0.85 m2/g; the average particle size of the first particles was 15µm, the content of aluminum element in the first particles was 7000 ppm, the average particle size of the second particles was 4 µm, the content of aluminum element in the second particles was 6000 ppm, and the mass ratio of the first particles to the second particles was 80%: 20%.

The positive electrode active material, the positive electrode binder, the positive electrode conductive agent were mixed, N-methylpyrrolidone (NMP) was added, and same was stirred under the action of a vacuum stirrer until the mixed system was a positive electrode slurry with a uniform fluidity; the positive electrode slurry was uniformly coated on the surfaces of both sides of the positive electrode current collector; the above coated aluminum foil was baked in an oven at five different temperature gradients (95°C+5°C, 100°C+5°C, 103°C±5°C, 100°C±5°C, 95°C±5°C), then it was dried in the oven at 120°C for 8 h, followed by rolling and slitting to obtain the required positive electrode plate.

### (2) Negative electrode plate

Ingredient preparation: Negative electrode current collector: the negative electrode current collector comprised a second substrate layer and a second metal layer located on the surfaces of both sides of the second substrate layer, wherein the second substrate layer: polypropylene (PP) with a thickness of 3 µm, and the second metal layer: a copper foil, the thickness T1 of the second metal layer on one side being 1.5 µm; the thickness T2 of the negative electrode current collector was 6 µm.

Negative electrode active material: 98.6 parts by weight of a silicon-carbon material (9.86 parts by weight) and a graphite material (88.74 parts by weight of artificial graphite) in total, a negative electrode binder: 1.4 parts by weight of CMC and SBR (the weight ratio of CMC to SBR was 65%:35%) in total;
the negative electrode active material and the negative electrode binder were mixed, and made into a slurry by a wet process (water was added into the above mixture formed by mixing, and same was stirred under the action of the vacuum stirrer until the mixed system was a negative electrode slurry with a uniform fluidity), and the slurry was coated on the surfaces of both sides of the negative electrode current collector, followed by drying (at a temperature of 85°C for 5h), rolling and die cutting to obtain the negative electrode plate. The mass content of silicon element in the silicon-carbon material was 50%, the mass content c of silicon element in the negative electrode active material layer was 4.93%, c/T1 = 4.93/1.5 = 3.29, and the VOI value of the negative electrode active material was 18, VOI/T2 = 18/6 = 3.

### (3) Electrolyte

Ingredient preparation: a lithium salt: LiFP6, 18 parts by weight;
organic solvents: 70 parts by weight, wherein the weight ratio of PC, EC and DMC was 40: 30: 30;
an additive: FEC, 12 parts by weight;
in a glove box filled with argon gas (moisture < 10 ppm, oxygen < 1 ppm), evenly mixing the organic solvents to obtain a mixed solution 1, adding the additive to the mixed solution 1 to obtain a mixed solution 2, slowly adding the lithium salt to the mixed solution 2, and stirring same until uniform to obtain a non-aqueous electrolyte.

### (4) Separator

A base film (with a thickness of 5 µm) was coated on the surface of one side with a ceramic coating (with a thickness of thickness 1 µm, which side was adjacent to the positive electrode plate) and on the surface of the other side with a PMMA coating (with a thickness of 1.5 µm, which side was adjacent to the negative electrode plate).

### (5) Preparation of lithium-ion secondary battery

The positive electrode plate of step (1), the separator of step (4), and the negative electrode plate of step (2) were wound to obtain a bare cell that was not filled with an electrolyte, and the wound electrode assembly was applied with 5 MPa for 10 min; the bare cell was placed in an outer packaging foil, and the electrolyte of step (3) was injected into the dried bare cell, followed by procedures such as vacuum packaging, leaving to stand, formation, shaping, and sorting, so as to obtain a desired lithium-ion secondary battery, wherein the number of positive electrode tabs was 15, and the number of negative electrode tabs was 15. The ratio of the thickness of the electrode assembly to the size L of the flat and straight region in the length direction of the electrode assembly was 0.035, the thickness of the negative electrode plate in the arc-shaped region was 114 µm, and the thickness the negative electrode plate in the flat and straight region was 114 µm.

### Example 2

### (1) Positive electrode plate

This example was carried out with reference to Example 1, except that the thickness of the first substrate layer was 8 µm and the thickness of the first metal layer was 2 µm, the tensile strength B of the positive electrode current collector was 220 MPa and the elongation of the positive electrode current collector was 0.5%; the chemical formula of the nickel-cobalt-manganese ternary material was LiNi0.5Co0.2Mn0.3O2, the mass ratio m of the nickel-cobalt-manganese ternary material in the positive electrode active material was 30%, the mass ratio of lithium cobaltate in the positive electrode active material was 70%, the average particle size A of the nickel-cobalt-manganese ternary material was 2.85 µm, with A/B = 2.85/220 = 0.013, the nickel-cobalt-manganese ternary material comprised single crystal particles and polycrystalline particles, the average particle size of the single crystal particles was 3 µm, and the average particle size of the polycrystalline particles was 2.5 µm, in the nickel-cobalt-manganese ternary material, the mass ratio of nickel in the transition metal elements was 50%, the residual alkali content of the nickel-cobalt-manganese ternary material was 700 ppm, and the specific surface area of the nickel-cobalt-manganese ternary material was 0.8 m2/g; the average particle size of the first particles was 1.0 µm, the content of aluminum element in the first particles was 6200 ppm, the average particle size of the second particles was 2 µm, the content of aluminum element in the second particles was 0 ppm.

### (2) Negative electrode plate

This example was carried out with reference to Example 1, except that the thickness T1 of the second metal layer on one side was 0.8 µm, the thickness T2 of the negative electrode current collector was 4.6 µm, with c/T1 = 4.93/0.8 = 6.16, the VOI value of the negative electrode active material was 10, with VOI/T2 = 10/4.6 = 2.2.

### (3) Electrolyte

This example was carried out with reference to Example 1, except that the mass content of fluoroethylene carbonate in the electrolyte was 15%.

### (4) Separator: this example was carried out with reference to Example 1.

(5) Preparation of lithium-ion secondary battery: this example was carried out with reference to Example 1. The ratio of the thickness of the electrode assembly to the size L of the flat and straight region in the length direction of the electrode assembly was 0.15.

### Example group 3

This example group was intended to illustrate the effects of changing the ratio of the thickness of the electrode assembly to the size L of the flat and straight region in the length direction of the electrode assembly.

### Example 3a

This example was carried out with reference to Example 1, except that the ratio of the thickness of the electrode assembly to the size L of the flat and straight region in the length direction of the electrode assembly was 0.05.

### Example 3b

This example was carried out with reference to Example 1, except that the ratio of the thickness of the electrode assembly to the size L of the flat and straight region in the length direction of the electrode assembly was 0.2.

### Example 3c

This example was carried out with reference to Example 1, except that the ratio of the thickness of the electrode assembly to the size L of the flat and straight region in the length direction of the electrode assembly was 0.03.

### Example 3d

This example was carried out with reference to Example 1, except that the ratio of the thickness of the electrode assembly to the size L of the flat and straight region in the length direction of the electrode assembly was 0.5.

### Example 4

This example was carried out with reference to Example 1, except that the thickness of the negative electrode plate in the arc-shaped region was 116 µm, and the thickness the negative electrode plate in the flat and straight region was 114 µm.

### Example group 5

This example group was intended to illustrate the effects of changing the mass ratio m of the nickel-cobalt-manganese ternary material in the positive electrode active material.

### Example 5a

This example was carried out with reference to Example 1, except that the mass ratio m of the nickel-cobalt-manganese ternary material in the positive electrode active material was 20%.

### Example 5b

This example was carried out with reference to Example 1, except that the mass ratio m of the nickel-cobalt-manganese ternary material in the positive electrode active material was 50%.

### Example group 6

This example group was intended to illustrate the effects of changing A/B.

This example group was carried out with reference to Example 1, except that A/B was changed. See Table 1-1 for details.

**Table 1-1**

| | First substrate layer | Thickness of first substrate layer/µm | Thickness of first metal layer/µm | Tensile strength B of positive electrode current collector/ MPa | Elongation of positive electrode current collector/ % | Average particle size of nickel-cobalt-manganese ternary material A/µm | A/B | Average particle size of single crystal particles /µm | Average particle size of polycry stalline particles /µm |
|---|---|---|---|---|---|---|---|---|---|
| Example 1 | Polypropylene (PP) | 6 | 1.5 | 250 | 0.7 | 3.62 | 0.01448 | 3.8 | 3.2 |
| Example 6a | Polypropylene (PP) | 6 | 1.5 | 250 | 0.7 | 2.5 | 0.01 | 3 | 1.3 |
| Example 6b | Polypropylene (PP) | 6 | 1.5 | 250 | 0.7 | 1 | 0.004 | 1.1 | 0.8 |
| Example 6c | Polyvinyl chloride | 3 | 3 | 120 | 0.5 | 1 | 0.0083 | 1.1 | 0.8 |
| Example 6d | Polypropylene (PP) | 6 | 1.5 | 250 | 0.7 | 3 | 0.012 | 3.6 | 1.6 |
| Example 6e | Polyvinyl chloride | 3 | 3 | 120 | 0.5 | 6 | 0.05 | 7 | 3.7 |

### Example group 7

This example group was intended to illustrate the effects of changing the mass ratio of the single crystal particles to the polycrystalline particles.

### Example 7a

This example was carried out with reference to Example 1, except that the mass ratio of the single crystal particles to the polycrystalline particles was 50%:50%, and the average particle size of the nickel-cobalt-manganese ternary material was 3.5 µm, with A/B = 3.5/250 = 0.014.

### Example 7b

This example was carried out with reference to Example 1, except that the mass ratio of the single crystal particles to the polycrystalline particles was 80%:20%, and the average particle size of the nickel-cobalt-manganese ternary material was 3.68 µm, with A/B = 3.68/250 = 0.01472.

### Example 7c

This example was carried out with reference to Example 1, except that the mass ratio of the single crystal particles to the polycrystalline particles was 90%:10%, and the average particle size of the nickel-cobalt-manganese ternary material was 3.74 µm, with A/B = 3.5/250 = 0.01496.

### Example group 8

This example group was intended to illustrate the effects of changing the aluminum element in the first particles or the aluminum element in the second particles.

### Example 8a

This example was carried out with reference to Example 1, except that the content of the aluminum element in the first particles was 6000 ppm.

### Example 8b

This example was carried out with reference to Example 1, except that the content of the aluminum element in the first particles was 8000 ppm.

### Example 8c

This example was carried out with reference to Example 1, except that the content of the aluminum element in the second particles was 5000 ppm.

### Example 8d

This example was carried out with reference to Example 1, except that the content of the aluminum element in the second particles was 7000 ppm.

### Example 9

This example was carried out with reference to Example 1, except that the average particle size of the first particles was the same as that of the second particles, both of which were 10 µm.

### Example group 10

This example group was intended to illustrate the effects of changing c/T1.

This example group was carried out with reference to Example 1, except that c/T1 was changed. See Table 1-2 for details.

### Example group 11

This example group was intended to illustrate the effects of changing VOI/T2.

This example group was carried out with reference to Example 1, except that VOI/T2 was changed. See Table 1-2 for details.

**Table 1-2**

| | Thickness of second substrate layer/µm | Thickness of second metal layer T1/µm | Thickness of negative electrode current collector T2/µm | Mass content of silicon element in negative electrode active material layer c/% | c/T1 | VoI value of negative electrode active material layer | VoI/T2 |
|---|---|---|---|---|---|---|---|
| Example 1 | 3 | 1.5 | 6 | 4.93 | 3.29 | 18 | 3 |
| Example 10a | 3 | 1.5 | 6 | 4 | 2.7 | 18 | 3 |
| Example 10b | 3 | 1.5 | 6 | 5.5 | 3.7 | 18 | 3 |
| Example 10c | 3 | 0.5 | 4 | 4 | 8 | 12 | 3 |
| Example 10d | 3 | 0.5 | 4 | 5.5 | 11 | 12 | 3 |
| Example 10e | 3 | 3.3 | 9.6 | 5.5 | 1.7 | 29 | 3 |
| Example 10f | 3 | 0.4 | 3.8 | 5.5 | 13.8 | 12 | 3.2 |
| Example 10g | 3 | 1.5 | 6 | 3 | 2 | 18 | 3 |
| Example 11a | 3 | 1.5 | 6 | 4.5 | 3 | 5 | 0.8 |
| Example 11b | 3 | 1 | 5 | 4.5 | 4.5 | 30 | 6 |
| Example 11d | 2 | 0.5 | 3 | 4.5 | 9 | 24 | 8 |
| Example 11e | 2 | 0.5 | 3 | 4.5 | 9 | 30 | 10 |
| Example 11f | 3 | 1.5 | 6 | 4.5 | 3 | 3 | 0.5 |

### Example group 12

This example group was intended to illustrate the effects of changing the mass content of fluoroethylene carbonate in the electrolyte.

### Example 12a

This example was carried out with reference to Example 1, except that the mass content of fluoroethylene carbonate in the electrolyte was 20%.

### Example 12b

This example was carried out with reference to Example 1, except that the mass content of fluoroethylene carbonate in the electrolyte was 2%.

### Comparative Example 1

This example was carried out with reference to Example 1, except that the ratio of the thickness of the electrode assembly to the size L of the flat and straight region in the length direction of the electrode assembly was 0.01.

### Comparative Example 2

This example was carried out with reference to Example 1, except that the ratio of the thickness of the electrode assembly to the size L of the flat and straight region in the length direction of the electrode assembly was 0.6.

### Comparative Example 3

This example was carried out with reference to Example 1, except that there was no fluoroethylene carbonate in the electrolyte.

### Test examples

The lithium-ion secondary batteries prepared in the examples and comparative examples were tested as follows, respectively:

### (1) Test of VOI value

The negative electrode plate in the battery was taken out, washed with an organic solvent DMC, dried, cut into an appropriate size, pasted on a sample plate, and tested by X-ray diffractometer to obtain the X-ray diffraction spectrum of the negative electrode. The excitation source of the X-ray diffractometer was CuKα, the scanning angle was in a range of 10°-90°, and the scanning speed was 2°/min. The VOI value was the ratio of the (004) peak area to the (110) peak area.

### (2) High-temperature cycling performance test

a) The lithium-ion battery was placed at 45°C, charged at a constant current of 1C to 4.42V, then charged at 0.7C to the upper voltage limit (4.45V), then charged at a constant voltage of 4.45V to 0.05C, and then left to stand for 5 min; then discharged at a constant current of 1C to 3V, and the discharge capacity at this time was the initial discharge capacity, which was recorded as C0, and then left to stand for 5 min; and
b) the lithium-ion battery was cycled for 700T according step a), and the discharge capacity of 700T cycle was recorded as C1. 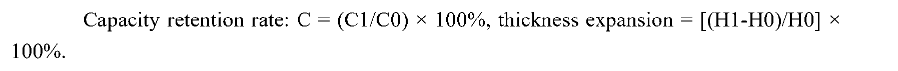
Capacity retention rate: C = (C1/C0) × 100%, thickness expansion = |(H1-H0)/H0] × 100%.

### (3) Test of electrode plate breakage

The lithium-ion battery was cycled according to the method of high-temperature cycling performance test. After cycling for 700T, the battery was disassembled, and the first and second folds in the battery cell were observed. If the first and second folds were opaque, the battery was determined to pass, and if the first or second fold has a spot-like photic zone or broken edge, the battery was determined to not pass. A total of 10 batteries were tested, in which the result was represented by "number of passes PASS/10". For example, only 8 of the 10 batteries passed the test, the result was represented by "8 PASS/10".

### (4) Test of safety performance

The battery was placed in an environment of 25°C+3°C and discharged at 0.2C to a cut-off voltage of 3.0V; the battery was left to stand for 5 min, charged to the upper limit voltage (4.45V) at 0.5C in a constant-current and constant-voltage manner, and the cut-off current was 0.05C (at this time, the battery was in a fully charged state). The fully charged battery cell was placed into a test box, and the test box was heated at a heating rate of (5±2)°C/min. After the temperature in the box reached 130°C+2°C and 145°C+2°C respectively, the temperature was kept constant for 60 min. If there was a fire or explosion in the battery, the battery was determined to not pass; if there was no fire or explosion in the battery, the battery was determined to pass. 10 batteries were tested at 130°C and 145°C respectively, and the result was represented by "10/number of passes pass". For example, only 8 of the 10 batteries passed the test, the result was represented by "10/8 pass".

### (5) Volumetric energy density test

The lithium-ion battery was placed at 25°C, charged at a constant current of 1C to 4.42V, then charged at 0.7C to the upper voltage limit (4.45V), then charged at a constant voltage of 4.45V to 0.05C, and the discharge capacity of the battery at this time was recorded as C. The length L, width S and thickness H of the battery were measured with a micrometer, then the volume energy density of the battery was = C/(L × S × H).

### (6) Lithium precipitation

The lithium-ion battery was placed at 25°C, charged at a constant current of 1C to 4.42V, then charged at 0.7C to the upper voltage limit (4.45V), then charged at the constant voltage of 4.45V to 0.05C. After that, the battery was disassembled and observed whether there was lithium precipitation on the negative electrode plate. If there was no lithium precipitation, the result was represented by "No lithium precipitation"; and if there was lithium precipitation, the result was represented by the proportion of lithium precipitation area to the surface area of the negative electrode.

### (7) Rate performance

(1) The lithium-ion battery was placed at 25+5°C and left to stand for 10 min; discharged at 0.2C to the lower limit voltage; and left to stand for 10 min, (2) the lithium-ion battery was fully charged at 0.7C in a constant temperature room (the temperature of the constant temperature room was 25±5°C) to a cut-off current of 0.025C and left to stand for 10 min, discharged at 0.2C to a cut-off voltage (3V) in a constant temperature room or a constant temperature box environment (the temperature of the constant temperature room was 25+5°C), the discharge capacity at this time was recorded as Q1, and the battery was left to stand for 10 min; (3) the lithium-ion battery was fully charged at 0.7C in a constant temperature room (the temperature of the constant temperature room was 25+5°C) to a cut-off current of 0.025C and left to stand for 10 min, discharged at 2C to a cut-off voltage (3V) in a constant temperature room or a constant temperature box environment (the temperature of the constant temperature room was 25±5°C), the discharge capacity at this time was recorded as Q2, and the battery was left to stand for 10 min. Rate performance % = (Q2/Q1) × 100%.

### (8) Thickness expansion rate

a) The lithium-ion battery was placed at 55°C, charged at a constant current of 1C to 4.42V, then charged at 0.7C to the upper voltage limit (4.45V), then charged at the constant voltage of 4.45V to 0.05C, and then left to stand for 5 min, the thickness of the battery at this time was measured as the initial thickness H0; then discharged at a constant current of 1C to 3V, and then left to stand for 5 min; and
b) the lithium-ion battery was cycled for 300T according step a), and the battery thickness of 300T cycle was recorded as H1. $Thickness expansion = \left[\left(H1-H0\right)/H0\right] \times 100 % .$

After cycling for 300T, the battery was observed for gas evolution. When there was no gas evolution, it means no gas evolution. When there was gas evolution, if the thickness expansion rate was not higher than 10%, it means slight gas evolution, and if it was higher than 10% but not higher than 20%, it means general gas evolution.

The results obtained are recorded in Table 2.

**Table 2**

| | Electrode plate breakage | Passing situation of hanging in hot box at 130°C for 60 min | Passing situation of hanging in hot box at 145°C for 60 min | Cycling capacity retention rate/% | Volumetr ic energy density (Wh/L) | Situation of lithium precipitation | Rate performan ce/% | Thickness expansion/% |
|---|---|---|---|---|---|---|---|---|
| Example 1 | 10 PASS/10 | 10/10 pass | 10/10 pass | 95.4% | 803.2 | No lithium precipitation | 95.7% | 6.8%, no gas evolution |
| Example 2 | 10 PASS/10 | 10/10 pass | 10/10 pass | 94.7% | 803.1 | No lithium precipitation | 95.1% | 7%, no gas evolution |
| Example 3a | 10 PASS/10 | 10/10 pass | 10/10 pass | 94.6% | 803.2 | No lithium precipitation | 95.3% | 7.3%, no gas evolution |
| Example 3b | 10 PASS/10 | 10/10 pass | 10/10 pass | 95.1% | 803.4 | No lithium precipitation | 95.6% | 7.1%, no gas evolution |
| Example 3c | 10 PASS/10 | 10/10 pass | 10/10 pass | 93.6% | 803.6 | No lithium precipitation | 95.0% | 8.5%, no gas evolution |
| Example 3d | 5 PASS/10 | 10/10 pass | 10/8 pass | 80.3% | 803.7 | No lithium precipitation | 95.0% | 7.8%, no gas evolution |
| Example 4 | 10 PASS/10 | 10/10 pass | 10/10 pass | 96.5% | 803.7 | No lithium precipitation | 95.9% | 7.2%, no gas evolution |
| Example 5a | 10 PASS/10 | 10/10 pass | 10/10 pass | 95.0% | 794.3 | No lithium precipitation | 97.3% | 6.9%, no gas evolution |
| Example 5b | 8 PASS/10 | 10/10 pass | 10/10 pass | 93.2% | 820.6 | No lithium precipitation | 90.4% | 11.3%, general gas evolution |
| Example 6a | 9 PASS/10 | 10/10 pass | 10/10 pass | 93.1% | 790.2 | No lithium precipitation | 95.5% | 10%, slight gas evolution |
| Example 6b | 6 PASS/10 | 10/10 pass | 10/10 pass | 92.3% | 795.3 | No lithium precipitation | 96.4% | 11.4%, general gas evolution |
| Example 6c | 8 PASS/10 | 10/10 pass | 10/10 pass | 95.2% | 800.7 | No lithium precipitation | 96.1% | 11.6%, general gas evolution |
| Example 6d | 10 PASS/10 | 10/10 pass | 10/10 pass | 95.7% | 800.5 | No lithium precipitation | 95.4% | 7.2%, no gas evolution |
| Example 6e | 5 PASS/10 | 10/10 pass | 10/10 pass | 95.0% | 750.6 | No lithium precipitation | 82.0% | 7.6%, no gas evolution |
| Example 7a | 10 PASS/10 | 10/10 pass | 10/10 pass | 95.5% | 800.2 | No lithium precipitation | 97.3% | 10%, slight gas evolution |
| Example 7b | 10 PASS/10 | 10/10 pass | 10/10 pass | 95.6% | 750.4 | No lithium precipitation | 95.4% | 7.3%, no gas evolution |
| Example 7c | **10** PASS/10 | 10/10 pass | 10/10 pass | 95.1% | 750.6 | No lithium precipitation | 88.2% | 7.2%, no gas evolution |
| Example 8a | 10 PASS/10 | 10/10 pass | 10/10 pass | 90.4% | 820.2 | No lithium precipitation | 95.3% | 7.1%, no gas evolution |
| Example 8b | 10 PASS/10 | 10/10 pass | 10/10 pass | 97.2% | 750.6 | No lithium precipitation | 95.6% | 7.5%, no gas evolution |
| Example 8c | 10 PASS/10 | 10/10 pass | 10/10 pass | 85.9% | 870.4 | No lithium precipitation | 97.2% | 7.2%, no gas evolution |
| Example 8d | 10 PASS/10 | 10/10 pass | 10/10 pass | 99.1% | 700.5 | No lithium precipitation | 90.7% | 7.6%, no gas evolution |
| Example 9 | 10 PASS/10 | 10/10 pass | 10/10 pass | 95.1% | 650.7 | No lithium precipitation | 95.2% | 7.4%, no gas evolution |
| Example 10a | 10 PASS/10 | 10/10 pass | 10/10 pass | 95.6% | 750.3 | No lithium precipitation | 95.2% | 7.1%, no gas evolution |
| Example 10b | 10 PASS/10 | 10/10 pass | 10/10 pass | 95.5% | 820.6 | No lithium precipitation | 95.6% | 7.2%, no gas evolution |
| Example 10c | 10 PASS/10 | 10/10 pass | 10/10 pass | 95.4% | 750.2 | No lithium precipitation | 95.3% | 7.2%, no gas evolution |
| Example 10d | 9 PASS/10 | 10/10 pass | 10/10 pass | 93.8% | 820.5 | No lithium precipitation | 93.4% | 7.3%, no gas evolution |
| Example 10e | 10 PASS/10 | 10/10 pass | 10/10 pass | 93.2% | 711.1 | No lithium precipitation | 93.1% | 7%, no gas evolution |
| Example 10f | 7 PASS/10 | 10/10 pass | 10/10 pass | 93.3% | 800.3 | No lithium precipitation | 93.1% | 7.1%, no gas evolution |
| Example 10g | 10 PASS/10 | 10/10 pass | 10/10 pass | 93.2% | 655.5 | No lithium precipitation | 93.8% | 7.6%, no gas evolution |
| Example 11a | 10 PASS/10 | 10/10 pass | 10/10 pass | 95.5% | 800.6 | No lithium precipitation | 95.0% | 7.4%, no gas evolution |
| Example 11b | 10 PASS/10 | 10/10 pass | 10/10 pass | 95.3% | 800.2 | No lithium precipitation | 95.0% | 7.3%, no gas evolution |
| Example 11d | 7 PASS/10 | 10/10 pass | 10/10 pass | 95.2% | 800.4 | No lithium precipitation | 95.4% | 7.2%, no gas evolution |
| Example 11e | 6 PASS/10 | 10/10 pass | 10/10 pass | 93.2% | 653.6 | No lithium precipitation | 94.2% | 7.3%, no gas evolution |
| Example 11f | 7 PASS/10 | 10/10 pass | 10/10 pass | 95.0% | 703.3 | No lithium precipitation | 95.1% | 7.2%, no gas evolution |
| Example 12a | 10 PASS/10 | 10/10 pass | 10/10 pass | 95.0% | 750.7 | No lithium precipitation | 95.0% | 20%, general gas evolution |
| Example 12b | 10 PASS/10 | 10/10 pass | 10/10 pass | 94.3% | 700.6 | Lithium precipitation area ≤ 10% | 95.2% | 7.1%, no gas evolution |
| Comparativ e Example 1 | 0 PASS/10 | 10/7 pass | 10/3 pass | 300T, greatly dropping to 50% or less | - | No lithium precipitation | - | 12%, no gas evolution |
| Comparativ e Example 2 | 0 PASS/10 | 10/9 pass | 10/1 pass | 60.0% | 800.9 | No lithium precipitation | 95.0% | 7.6%, no gas evolution |
| Comparativ e Example 3 | 8 PASS/10 | 10/9 pass | 10/8 pass | 85.7% | 700.1 | Lithium precipitation area 15%-20% | 93.0% | 7.8%, no gas evolution; |

When the lithium-ion secondary battery of comparative example 1 is subjected to a high-temperature cycling test, the capacity retention rate greatly drops to 50% or less after about 300T cycling, so the rate performance and volume energy data thereof do not exist.

The thickness expansion rate of the lithium-ion secondary battery of comparative example 1 is 12%, but it does not generate gas evolution, which means that the thickness of the lithium-ion secondary battery of comparative example 1 changes during cycling, but no gas is generated in the battery, so it does not generate gas evolution.

As can be seen from table 2, it can be seen from comparative examples and comparative examples of examples that the electrode plate breakage of the ion secondary battery of the examples is obviously reduced, the hot box test pass rate is obviously improved, and the cycling capacity retention rate is obviously improved, which shows that by controlling the thickness of the battery assembly of the nickel-cobalt-manganese ternary material and silicon-carbon material system, the size of the flat and straight region in the length direction of the electrode assembly, the mass content of silicon element in the silicon-carbon material and the mass content of fluoroethylene carbonate in the electrolyte, the electrode plate breakage in the battery can be improved while maintaining a higher energy density, the safety performance and cycling performance of the battery can be improved, and the thickness expansion rate of the battery can be reduced.

The preferred embodiments of the present invention have been described in detail above; however, the present invention is not limited thereto. Within the technical concept of the present invention, various simple modifications can be made to the technical solution of the present invention, including the combination of various technical features in any other suitable way. These simple modifications and combinations should also be regarded as the content disclosed by the present invention and all fall within the scope of protection of the present invention.

## Claims

1. A lithium-ion secondary battery, **characterized in that** comprising an electrode assembly in which a positive electrode plate (1), a separator (3) and a negative electrode plate (2) are stacked and wound, wherein the electrode assembly has an arc-shaped region (5) and a flat and straight region (4); the ratio of the thickness of the electrode assembly to the size L of the flat and straight region (4) in the length direction of the electrode assembly is (0.03-0.5): 1;
the positive electrode plate comprises a positive electrode active material, the positive electrode active material comprises a nickel-cobalt-manganese ternary material, and the nickel-cobalt-manganese ternary material comprises a material with a chemical formula of LiₐNiₓCo_{y}Mn_{z}M_{b}O₂, with 0.9 ≤ a ≤ 1.1, 0.5 ≤ x ≤ 0.95, 0 < y ≤ 0.3, 0 < z ≤ 0.3, 0 ≤ b ≤ 0.05, M being selected from at least one of Al, Zr, B, Mg, Y, Sr, W, Ti and Nb;
the negative electrode plate comprises a negative electrode active material, the negative electrode active material comprises a silicon-carbon material, and the mass content of silicon element in the silicon-carbon material is 35%-70%; and
the lithium-ion secondary battery further comprises an electrolyte, the electrolyte comprises fluoroethylene carbonate, and the mass content of the fluoroethylene carbonate in the electrolyte is 2%-20%.

2. The lithium-ion secondary battery according to claim 1, **characterized in that** the ratio of the thickness of the electrode assembly to the size L of the flat and straight region (4) in the length direction of the electrode assembly is (0.05-0.2): 1; and/or,
the thickness of the negative electrode plate in the arc-shaped region (5) is greater than the thickness of the negative electrode plate in the flat and straight region (4); and/or,
the nickel-cobalt-manganese ternary material has a mass content of aluminum element of 1000-2500 ppm, a mass content of titanium element of 500-1000 ppm, and a mass content of tungsten element of 2000-4000 ppm.

3. The lithium-ion secondary battery according to claim 1 or 2, **characterized in that** the positive electrode active material further comprises lithium cobaltate, and a mass ratio of the nickel-cobalt-manganese ternary material in the positive electrode active material is m, with 0% < m ≤ 50%; the nickel-cobalt-manganese ternary material comprises single crystal and/or polycrystalline particles, and an average particle size of the nickel-cobalt-manganese ternary material is A, wherein A is 1-10 in µm;
the positive electrode plate (1) further comprises a positive electrode current collector (11), and a tensile strength of the positive electrode current collector is B, wherein B is 120-300 in MPa;
A and B satisfy: A/B is 0.004-0.05; and/or,
the silicon-carbon material comprises a porous carbon matrix and a silicon material located in pores inside the porous carbon matrix.

4. The lithium-ion secondary battery according to claim 3,**characterized in that** A/B is 0.008-0.042,preferably, A/B is 0.012-0.034; and/or,
the mass ratio of the nickel-cobalt-manganese ternary material in the positive electrode active material is m, with 20%≤ m ≤ 40%.

5. The lithium-ion secondary battery according to any one of claims 1 to 4, **characterized in that** the positive electrode current collector (11) comprises a first substrate layer and a first metal layer located on the surfaces of both sides of the first substrate layer, and the first substrate layer comprises a first polymer;
preferably, the first polymer comprises at least one of polypropylene, polyethylene, polyterephthalate, polyethylene naphthalate, polyimide, polycarbonate, polyvinyl chloride, polyvinylidene fluoride, polystyrene, polytetrafluoroethylene, polyvinyl alcohol and modified polymers of the above substances;
preferably, the first metal layer comprises aluminum and/or an aluminum alloy.

6. The lithium-ion secondary battery according to claim 5, **characterized in that** a thickness of the first substrate layer is 2 µm-28 µm; and/or,
a thickness of the first metal layer is 0.5 µm-2.5 µm; and/or,
a thickness of the positive electrode current collector is 3 µm-30 µm; and/or,
an elongation of the positive electrode current collector (11) is 0.5%-1.8%.

7. The lithium-ion secondary battery according to any one of claims 1 to 6, **characterized in that** a specific surface area of the nickel-cobalt-manganese ternary material is 0.6 m²/g-l m²/g; and/or,
a residual alkali content of the nickel-cobalt-manganese ternary material is less than or equal to 2000 ppm; and/or,
the nickel-cobalt-manganese ternary material further comprises single crystal particles and/or polycrystalline particles, a mass ratio of the single crystal particles to the polycrystalline particles is (90%-10%):(10%-90%); and/or,
the nickel-cobalt-manganese ternary material further comprises polycrystalline particles having an average particle size of 1 µm-10 µm; and/or,
a compacted density of the positive electrode plate is greater than or equal to 3.45 g/cm³.

8. The lithium-ion secondary battery according to claim 7, **characterized in that** in the nickel-cobalt-manganese ternary material, a mass ratio of single crystal particles can be in the range of 90%-10%; and/or,
a mass ratio of polycrystalline particles can be in the range of 10%-90%; and/or,
an average particle size of the polycrystalline particles is 1 µm-10 µm; and/or,
an average particle size of the single crystal particles is 1 µm-10 µm.

9. The lithium-ion secondary battery according to any one of claims 3 to 8, **characterized in that** the lithium cobaltate comprises a first particles and a second particles, and an average particle size of the first particles is larger than that of the second particles;
preferably, the average particle size of the first particles is 10 µm-30 µm, and the average particle size of the second particles is 2 µm-10 µm;
preferably, a mass ratio of the first particles to the second particles is (50%-99%):(50%-1%).

10. The lithium-ion secondary battery according to claim 9, **characterized in that** a ratio of the average particle size of the first particles to the average particle size of the second particles is (2.1-8.5): 1; and/or,
a mass ratio of the first particles in lithium cobaltate can be in the range of 50%-99%; and/or,
a mass ratio of the second particles in lithium cobaltate can be in the range of 50%-1%.

11. The lithium-ion secondary battery according to claim 9 or 10, **characterized in that** the first particles and/or the second particles are doped with aluminum element; and/or,
the content of the aluminum element in the first particles is 6000 ppm-8000 ppm; and/or,
the content of the aluminum element in the second particles is 5000 ppm-7000 ppm.

12. The lithium-ion secondary battery according to any one of claims 1 to 11, **characterized in that** the positive electrode plate further comprises a positive electrode tab extending from the positive electrode current collector along a width direction of the positive electrode plate, and the positive electrode tab is electrically connected with the positive electrode current collector, and the number of the positive electrode tab is greater than or equal to 2; and/or,
the negative electrode plate comprises a negative electrode tab extending from a negative electrode current collector along a width direction of the negative electrode plate, and the negative electrode tab is electrically connected with the negative electrode current collector, and the number of the negative electrode tab is greater than or equal to 2.

13. The lithium-ion secondary battery according to any one of claims 1 to 12 **characterized in that** the negative electrode plate (2) further comprises a negative electrode current collector (21) and a negative electrode active material layer (22) located on the surface of at least one side of the negative electrode current collector; the negative electrode active material layer (22) comprises the negative electrode active material, and the negative electrode active material further comprises a graphite material;
preferably, the mass content c of the silicon element in the negative electrode active material layer is 1.5%-22%; and
preferably, the mass content of the silicon-carbon material in the negative electrode active material is 5%-30%.

14. The lithium-ion secondary battery according to claim 13, **characterized in that** the negative electrode current collector (21) comprises a second substrate layer and a second metal layer located on the surfaces of both sides of the second substrate layer; the second substrate layer comprises a second polymer; the mass content c of the silicon element in the negative electrode active material layer and the thickness T1 of the second metal layer on one side satisfy: c/T1 is 2-13;and/or,
a V_{OI} value of the negative electrode active material layer and the thickness T2 of the negative electrode current collector satisfy: V_{OI}/T2 is 0.5-8, wherein V_{OI} is the ratio of the intensity of the 004 diffraction peak to the intensity of the 110 diffraction peak in the XRD pattern of the negative electrode plate;and/or,
a V_{OI} value of the negative electrode active material layer is 5-30.

15. The lithium-ion secondary battery according to any one of claims 1 to 14, **characterized in that** the silicon-carbon material has a volume distribution particle size Dv10 of 1 µm-6 µm, Dv50 of 6 µm-15 µm, and Dv90 of 12 µm-30 µm.
